# FASCICULE DE BREVET EUROPEEN

(11) **EP 0 517 941 B1**
(45) Date de publication et mention de la délivrance du brevet: **13.09.1995**
(21) Numéro de dépôt: 91109634.5
(22) Date de dépôt: 12.06.1991
(51) Int. Cl.: A23C 1/12, A23C 9/13

(54) **Procédé de préparation d'un produit laitier évaporé**
Verfahren zur Zubereitung von Kondensmilch
Process for the preparation of an evaporated milk product

(43) Date de publication de la demande: 16.12.1992
(73) Titulaire: SOCIETE DES PRODUITS NESTLE S.A., 1800 Vevey (CH)
(72) Inventeur: Schwan Michael,, 3407 Biglen, (CH)

(56) Documents cités:
- EP-A- 0 406 621
- WO-A-87/06797
- US-A- 2 886 450
- US-A- 4 495 212

## Description

La présente invention concerne un procédé de préparation d'un produit laitier évaporé contenant de la matière grasse.

Le lait ou la crème évaporé est préparé à partir du lait entier ou de la crème par élimination d'une partie de l'eau qu'il ou elle contient. La concentration a pour effet de rapprocher les globules gras ce qui peut provoquer une remontée de la matière grasse durant l'entreposage. Enfin, le lait évaporé étant destiné à être conservé longtemps, doit être stérilisé. Lorsque la stérilisation est mise en oeuvre par un traitement thermique d'appertisation après conditionnement, par exemple dans des boîtes, il y a un risque accru de déstabilisation de la phase liquide par la chaleur du fait de la perturbation du système caséinate, phosphate de calcium consécutive à la concentration. A l'entreposage, le lait ainsi traité peut s'épaissir, puis gélifier. Une manière usuelle de pallier ce dernier inconvénient est d'ajouter des sels de stabilisation comme par exemple le phosphate disodique ou le citrate trisodique. Cependant, ces additifs sont de plus en plus contestés par les législations alimentaires. Une alternative à la stérilisation par appertisation est le conditionnement aseptique du lait évaporé ayant été stérilisé en ligne, par exemple par ultra haute température ou haute température courte durée. On connaît, par exemple selon US-A-2.886.450, un procédé de production de lait évaporé stérilisé à haute température courte durée, dans lequel on améliore la stabilité du produit à l'entreposage en le traitant thermiquement, puis en l'homogénéisant. Ce dernier procédé n'empêche pas une gélification à l'entreposage prolongé.

EP-A-0406621, concerne un procédé de fabrication d'un lait évaporé, dans lequel le produit de départ subit une concentration par évaporation suivie d'une homogénéisation en deux étapes et comprenant un traitement thermique intermédiaire entre les deux étapes d'homogénéisation. Il n'y est jamais question de soumettre seulement une part du flux à l'homogénéisation.

Le but de l'invention est de fournir un procédé de préparation d'un produit laitier évaporé stable à l'entreposage et résistant à l'acidité du café dans lequel les sels de stabilisation sont diminués, voire supprimés.

L'invention concerne donc un procédé de préparation d'un produit laitier évaporé contenant de la matière grasse stable à l'entreposage, dans lequel on traite thermiquement un produit laitier dont le rapport pondéral matière grasse: matière sèche non grasse est 0,2:1 à 1,2:1, on le concentre jusqu'à une teneur en matière sèche de 20 à 40% en poids, puis on stérilise le concentrat avant de ou après l'avoir homogénéisé.

Selon l'invention, le but assigné est atteint de manière surprenante par le fait que l'on sépare le produit laitier en un premier flux et un second flux, que l'on homogénéise le premier flux représentant 5 à 75% en poids du flux total, qu'on mélange le premier flux homogénéisé au second non homogénéisé, qu'on traite thermiquement le mélange avant de le concentrer, puis on homogénéise le concentrat avant de le stériliser.

Pour mettre en oeuvre le procédé, on standardise le cas échéant le lait entier, c'est-à-dire qu'on ajuste les quantités pondérales respectives de matière grasse et de solides non gras aux valeurs désirées par addition selon les besoins, par exemple de lait écrémé, de crème ou d'huile de beurre (matière grasse lactique anhydre).

Selon un premier mode de réalisation du procédé, une fois cette standardisation opérée, on préchauffe le produit laitier à 50-100°C puis on le sépare en deux flux en réglant simplement le débit d'entrée à une valeur supérieure au débit de sortie de l'homogénéisateur. De cette manière, on obtient un premier flux, principal, qui est homogénéisé et un second flux, dérivé, qui contourne l'homogénéisateur.

L'homogénéisation du flux principal est effectuée de préférence dans des conditions poussées.

Le but de l'homogénéisation est d'augmenter la surface des globules gras de manière à mieux lier les protéines et compenser ainsi l'insuffisance relative de lipides membranaires. Par homogénéisation poussée, on entend que le produit est traité en un ou plusieurs passages dans un homogénéisateur à un ou plusieurs étages à des pressions allant de 150 à 500 bar, de préférence en un ou deux passages dans deux étages à 200-300 bar pour le premier, puis à environ 50 bar pour le second, De cette manière, on assure une réduction et une répartition homogène de la dimension des globules gras dans le flux de produit homogénéisé.

De manière inattendue, l'homogénéisation d'une partie seulement du produit à traiter préalablement à la concentration suffit à assurer une augmentation substantielle de la stabilité du produit concentré. Bien entendu, la pression d'homogénéisation nécessaire, de 150 à 350 bar est également liée à l'augmentation de stabilité désirée. Plus le pourcentage pondéral du produit homogénéisé par rapport à la totalité du produit traité et plus la pression d'homogénéisation sont élevés, plus le concentré résiste à la coagulation durant l'étape de stérilisation, et par conséquent moins il est nécessaire d'ajouter de sel de stabilisation dont le but est justement d'éviter une telle coagulation.

Après homogénéisation, le flux principal peut, de préférence subir un temps d'attente, par exemple jusqu'à 5 min. à la température d'homogénéisation.

Ensuite, les deux flux sont mélangés, puis préchauffés.

On les traite ensuite thermiquement de manière à stabiliser les liaisons entre les protéines, de sorte qu'elles subsistent après la concentration. Ce traitement thermique peut avoir lieu par chauffage direct ou indirect dans tout appareil usuel permettant de maintenir le liquide à 80-150°C pendant 1 à 1200 s. Bien entendu, la limite supérieure de la température correspond à la limite inférieure de la durée. On peut ainsi par exemple combiner un échangeur à plaques avec un tube d'attente et une vanne de contre-pression réglée, deux échangeurs à plaques reliés par un tube d'attente ou encore un échangeur à plaques associé à une vanne de contre-pression réglée et une cuve d'attente thermostatisée.

Après ce traitement thermique, on concentre le liquide par évaporation avec expansion dans un évaporateur à flot tombant à simple ou de préférence à multiple effet à une teneur en matière sèche de 20 à 40% et de préférence 24-35% en poids.

Une fois concentré, le liquide est homogénéisé, de préférence en un passage dans un homogénéisateur à deux étages à 75-300 bar pour le premier et environ 30 bar pour le second. Le but de cette homogénéisation est de désintégrer les grappes de globules gras qui se sont formées durant l'étape de concentration et de réduire la taille de ces globules gras.

Après l'homogénéisation, on peut procéder directement au traitement thermique du concentrat homogénéisé ou alors procéder à un entreposage intermédiaire. Dans le premier cas, on règle le cas échéant la teneur en matière sèche du concentrat à la valeur désirée pour le produit final, par exemple 24 à 33% en poids par addition d'eau. Dans le second cas, on refroidit le concentrat à 1-10°C et de préférence à 4-8°C, on règle sa teneur en matière sèche comme ci-dessus et on le laisse au repos pendant 1 à 24 h. On peut aussi procéder directement au second traitement thermique sans entreposage intermédiaire.

Le second traitement thermique peut s'effectuer comme indiqué ci-dessus pour le premier, c'est-à-dire par chauffage direct ou indirect à 50-150°C, par exemple par injection de vapeur et, après un temps d'attente de 1-600 s, par expansion dans un vase, ce qui produit un refroidissement à 50 -100°C. Durant ce second traitement thermique , on stabilise les protéines liées par dénaturation partielle. Les liaisons ainsi renforcées sont suffisamment solides pour que les protéines ne puissent plus coaguler durant la stérilisation ultérieure.

On procède alors à une homogénéisation dans des conditions semblables à l'homogénéisation indiquée précédemment et dans le même but, à savoir de désintégrer les grappes de globules gras formées. On refroidit ensuite l'homogénéisat à 0-20°C, de préférence à 4-8°C et on ajuste le cas échéant sa teneur en matière sèche à la valeur désirée du produit final par addition d'eau.

On procède enfin à la stérilisation du produit laitier, le cas échéant après un entreposage intermédiaire. Selon un premier mode de mise en oeuvre de cette stérilisation, on le conditionne dans des récipients, par exemple des boîtes métalliques, bouteilles en verre ou en matière plastique résistant à la chaleur, que l'on scelle hermétiquement, puis on traite les récipients dans un stérilisateur à 95-135°C pendant 30 s à 60 min., la limite supérieure de température correspondant à la durée la plus faible en une seule étape ou par palliers progressifs de température.

Dans une variante de la stérilisation, on effectue une stérilisation en ligne suivie d'un remplissage aseptique. Pour ce faire, on préchauffe le concentrat à 50 -90°C, on le stérilise en ligne par chauffage indirect ou direct, par exemple à 105-150°C pendant 2 s à 1 h., la limite supérieure de la température correspondant à la limite inférieure de la durée, et de préférence par haute température courte durée ou ultra haute température. On refroidit ensuite le produit laitier à 50-90°C, le cas échéant par expansion, puis on l'homogénéise, en un ou plusieurs passages et un ou deux étages, à 50-300 bar, de préférence en un passage d'abord à 200-250 bar au premier étage, puis environ 50 bar au second étage. On le refroidit enfin à 4-30°C, de préférence à environ 20°C et on le conditionne dans des emballages, par exemple des boîtes métalliques ou des briques en carton. Les opérations suivant la stérilisation s'opèrent naturellement de manière aseptique.

Selon une variante non préférée du procédé, on peut ajouter le flux homogénéisé au flux dérivé après la concentration et l'homogénéisation de ce dernier, puis procéder à la stérilisation du mélange. Dans une forme préférée de cette dernière variante, on peut traiter thermiquement le flux homogénéisé avant son mélange avec le flux n'ayant pas subi d'homogénéisation préalable à sa concentration.

Le produit laitier préparé selon l'invention sans sels de stabilisation ou avec une teneur réduite en ces sels est stable à l'entreposage de la même manière que les produits courants contenant par exemple environ 0,14% en poids de sels de stabilisation. De plus, il est stérilisable sans ou avec peu de ces derniers additifs qui étaient jugés indispensables jusqu'à présent pour éviter la gélification et/ou la coagulation durant la stérilisation. De plus, il résiste parfaitement bien à l'acidité d'un extrait aqueux de café chaud sans produire de floculation lorsqu'on l'ajoute à un tel extrait.

Un autre effet très intéressant du procédé selon l'invention dans son mode de réalisation préféré est qu'il permet d'augmenter de manière substantielle la pression d'homogénéisation lors de l'homogénéisation du concentrat, ce qui produirait normalement une coagulation lors de la stérilisation ultérieure. Par ailleurs, le fait de ne traiter qu'une partie de la matière première par l'homogénéisation tout en assurant la stabilité à l'entreposage de l'ensemble du produit présente un avantage économique important.

Les exemples ci-après illustrent l'invention. Dans ces exemples, les parties et pourcentages sont pondéraux, sauf indication contraire.

### Exemples 1-12

On standardise un lait entier par addition de crème pour obtenir une matière première contenant 8% de matière grasse et 17% de solides non gras du lait.
On préchauffe cette matière première à 80°C pendant 30 s. dans un échangeur à plaques, puis on la fait passer dans un homogénéisateur à deux étages dont on règle le débit pour qu'un flux représentant le pourcentage indiqué ci-après du flux entrant soit traité, le reste étant dérivé, c'est-à-dire ne subissant pas d'homogénéisation. Dans le premier et le cas échéant dans le second étage règnent les pressions indiquées ci-après. On mélange ensuite les flux homogénéisé et non homogénéisé, puis on chauffe le mélange au moyen d'un échangeur à plaques à 120°C pendant 72 s. En variante de l'exemple 1 le préchauffage à 120°C peut être suivi d'un refroidissement à 96°C pendant 8 min. en cuve (exemple 4). On dirige ensuite le mélange vers un évaporateur à flot tombant où il est concentré à 25% de matière sèche par expansion sous vide. On préchauffe le concentrat à 70°C, puis on le traite dans un homogénéisateur à deux étages, avec les pressions indiquées ci-après.
On refroidit le concentrat homogénéisé à 5°C, on le verse dans des bouteilles en verre que l'on ferme hermétiquement, puis on stérilise les bouteilles dans un stérilisateur rotatif continu à 117°C pendant 15 min. En variante de l'exemple 1, on peut traiter les bouteilles à 120°C pendant 8 min (exemple 5).

A titre de comparaison (exemples comparatifs 1,5,6 et 7), on effectue le même traitement avec homogénéisation de la totalité de la matière première.

On compare également les résultats obtenus par addition de 0,14% de hydrogénophosphate disodique, mais sans homogénéisation de la matière première (exemple comparatif 8).

Pour évaluer la stabilité à l'entreposage d'un lait évaporé, on examine la viscosité (N.s.) du produit stérilisé qui sert de critère, puisque l'épaississement est en quelque sorte le préalable à la coagulation: plus la viscosité est élevée aprés stérilisation, moins le produit était stable avant la stérilisation et à plus forte raison à l'entreposage. On considère que le produit final coagule lorsque la viscosité atteint la limite supérieure d'environ 23-25 N.s.

Les résultats de mesure de viscosité et les conditions du procédé sont indiqués dans le tableau I ci-après.

**Tableau I**

| Exemple | Flux homogénéisé % | Pression d'homogénéisation de la matière première en une ou deux étapes (bar) | Pression d'homogénéisation du concentrat en deux étapes (bar) | Viscosité (N.s.) |
|---|---|---|---|---|
| 1 | 75 | 250 + 50 | 170 + 30 | 16 |
| 2 | 50 | 250 + 50 | 170 + 30 | 17 |
| 3 | 25 | 250 + 50 | 170 + 30 | 20 |
| 4 | 75 | 250 + 50 | 170 + 30 | 16 |
| 5 | 75 | 250 + 50 | 170 + 30 | 16 |
| Comparaison 1 | 100 | 250 + 50 | 170 + 30 | 15 |
| Comparaison 2 | 75 | 170 + 30 | 170 + 30 | coagulé |
| Comparaison 3 | 50 | 170 + 30 | 170 + 30 | coagulé |
| Comparaison 4 | 25 | 170 + 30 | 170 + 30 | coagulé |
| Comparaison 5 | 100 | 170 + 30 | 170 + 30 | 22 |
| 9 | 75 | 300 | 85 + 15 | 16 |
| 10 | 50 | 300 | 85 + 15 | 16,5 |
| 11 | 25 | 300 | 85 + 15 | 17,5 |
| Comparaison 6 | 100 | 300 | 85 + 15 | 16 |
| 12 | 50 | 300 | 170 + 30 | 17,5 |
| Comparaison 7 | 100 | 300 | 170 + 30 | 15,5 |
| Comparaison 8 | -- | --- | 170 + 30 | 17,5 |

Les résultats ci-dessus montrent l'effet inattendu de l'homogénéisation partielle de la matière première avant concentration et l'influence de la pression totale d'homogénéisation à flux traité identique (exemples 2,3 et 4) sur la stabilisation du lait évaporé par rapport à l'homogénéisation totale (exemples comparatifs 1,5,6 et 7).

Par ailleurs, les résultats avec l'homogénéisation partielle de la matière première sont comparables à ceux que l'on obtient par addition d'agent stabilisant mais sans homogénéisation de la matière première avant concentration (exemples 1-5, 9-11 et 12 comparés à l'exemple comparatif 8).

### Exemples 13-18

Ces exemples documentent la relation qui existe entre la viscosité du lait évaporé après la stérilisation et la quantité de sel de stabilisation (Na2HP04) ajoutée dans le procédé selon l'invention d'une part et dans un procédé traditionnel d'autre part (comparaison 9).

Les résultats relatif à la viscosité du lait évaporé en fonction des paramètres du procédé sont indiqués dans le tableau II ci-après:

**Tableau II**

| Exemple | Flux homogénéisé (%) | Pression d'homogénéisation de la matière première en une ou deux étapes (bar) | Na2HP04 ajouté (%) | Viscosité (N.s.) |
|---|---|---|---|---|
| 13 | 50 | 250 + 50 | 0,06 | 15,5 |
| 14 | 25 | 250 + 50 | 0,1 | 16,5 |
| 15 | 25 | 170 + 30 | 0,12 | 16,5 |
| 16 | 50 | 300 | 0,06 | 16 |
| 17 | 75 | 300 | 0,08 | 15 |
| 18 | 50 | 250 + 50 + 5 min. d'attente à 80°C | 0,02 | 15 |
| Comparaison 9 | -- | -- | 0,12 | 17 |

On constate à partir des résultats du tableau II ci-dessus que l'homogénéisation partielle de la matière première permet de réduire notablement la quantité de sel de stabilisation ajoutée à viscosité comparable du produit après stérilisation. Dans ces exemples ainsi que pour le procédé traditionnel, on s'est placé dans les conditions de viscosité minimum correspondant à la plus grande stabilisation possible par l'addition de sel de stabilisation, car la viscosité décroit, passe par un minimum, puis croit de nouveau lorsque l'on augmente la quantité de sel de stabilisation.

On constate en particulier que plus le pourcentage de flux homogénéisé est élevé, moins on doit ajouter de sel de stabilisation pour atteindre le minimum de viscosité correspondant.

### Exemple 19

On procède comme à l'exemple 1 jusqu'à la stérilisation. Pour effectuer celle-ci, on préchauffe le concentrat dans un échangeur à plaques jusqu'à 80°C, puis on le stérilise à 120°C dans un échangeur à plaques et on le maintient pendant 7 min. à cette température dans un tube d'attente. On procède alors à son expansion dans un vase ou sa température tombe à 78°C, on l'homogénéise en deux étages à 200 bar puis 50 bar, on refroidit l'homogénéisat à 20°C au moyen d'un échangeur a plaques, puis on remplit des boîtes que l'on scelle hermétiquement. L'expansion, l'homogénéisation, le refroidissement et le remplissage s'effectuent dans des conditions aseptiques.
Le produit a la même stabilité à l'entreposage à température ambiante qu'un lait évaporé stabilisé avec sels de phosphate.

### Exemple 20

On procède comme à l'exemple 1 jusqu'à la stérilisation. Pour ce faire, on préchauffe le concentrat dans un échangeur à plaques à 75°C, puis on le stérilise à 140°C par injection directe de vapeur et on le maintient à cette température pendant 10 s. dans un tube (stérilisation à ultra haute température). Après refroidissement à 73°C dans un échangeur à plaques, on l'homogénéise en deux étages à 250 bar puis 50 bar, on refroidit l'homogénéisat à 20°C dans un échangeur à plaques, puis on remplit des briques en carton que l'on scelle hermétiquement. Toutes les étapes suivant la stérilisation sont mises en oeuvre aseptiquement. Le produit a la même stabilité à l'entreposage à température ambiante qu'un lait évaporé stabilisé avec sels de phosphate.

A titre de comparaison, un lait évaporé traité de la même manière mais sans les étapes d'homogénéisation partielle du produit de départ, de traitement thermique de l'homogénéisat avant concentration, de traitement thermique et d'homogénéisation du concentrat décrites en détail à l'exemple 1, gélifierait rapidement après un traitement de stérilisation à ultra haute température.

Dans la description précédente, on a procédé à la stabilisation de lait évaporé par homogénéisation partielle d'un lait de vache, préalablement à sa concentration. On obtiendrait des résultats analogues par traitement correspondant d'un lait d'autre mammifère, par exemple de bufflone, de chèvre ou de brebis sans sortir du cadre de l'invention.

## Revendications

1. Procédé de préparation d'un produit laitier évaporé contenant de la matière grasse stable à l'entreposage, dans lequel on traite thermiquement un produit laitier, dont le rapport pondéral matière grasse : matière sèche non grasse est 0,2:1 à 1,2:1, on le concentre jusqu'à une teneur en matière sèche de 20 à 40% en poids, puis on stérilise le concentrat, avant de ou après l'avoir homogénéisé, caractérisé par le fait que l'on sépare le produit laitier en un premier flux et un second flux, que l'on homogénéise le premier flux représentant 5 à 75% en poids du flux total, qu'on mélange le premier flux homogénéisé au second non homogénéisé, qu'on traite thermiquement le mélange avant de le concentrer, puis on homogénéise le concentrat avant de le stériliser.

2. Procédé selon la revendication 1, caractérisé par le fait que le premier flux traité par homogénéisation représente environ 50% en poids du flux total.

3. Procédé selon la revendication 1, caractérisé par le fait que l'on ajoute 0,02 à 0,2% en poids de sel de stabilisation avant concentration.

4. Procédé selon la revendication 1, caractérisé par le fait que l'on traite thermiquement le premier flux traité par homogénéisation.

5. Procédé selon la revendication 1, caractérisé par le fait que l'on remplit des récipients avec le produit laitier évaporé, que l'on scelle hermétiquement les récipients et qu'on les stérilise.

6. Procédé selon la revendication 1, caractérisé par le fait que l'on stérilise le produit laitier évaporé en ligne à haute température, courte durée ou à ultra haute température, que l'on homogénéise, que l'on refroidit et que l'on conditionne le produit laitier stérilisé aseptiquement .

## Claims

1. A process for the production of a storable evaporated milk product containing fats, in which a milk product having a ratio by weight of fats to non-fat dry matter of 0.2:1 to 1.2:1 is heat-treated and then concentrated to a dry matter content of 20 to 40% by weight, after which the concentrate is sterilized before or after homogenization, characterized in that the milk product is separated into a first flux and a second flux, the first flux representing 5 to 75% by weight of the total flux is homogenized, the first homogenized flux is mixed with the second non-homogenized flux, the mixture is heat-treated before concentration and the concentrate is homogenized before sterilization.

2. A process as claimed in claim 1, characterized in that the first flux treated by homogenization represents approximately 50% by weight of the total flux.

3. A process as claimed in claim 1, characterized in that 0.02 to 0.2% by weight of stabilizing salt is added before concentration.

4. A process as claimed in claim 1, characterized in that the first flux treated by homogenization is heat-treated.

5. A process as claimed in claim 1, characterized in that containers are filled with the evaporated milk product, hermetically sealed and sterilized.

6. A process as claimed in claim 1, characterized in that the evaporated milk product is subjected to high temperature/short time or ultra-high temperature on-line sterilization, homogenized and cooled and the sterilized milk product is packed under aseptic conditions.

## Patentansprüche

1. Verfahren zur Herstellung eines lagerbeständiges Fett enthaltenden kondensierten Milchprodukts, in dem man ein Milchprodukt wärmebehandelt, bei dem das Gewichtsverhältnis von Fett zu Nichtfett-Trockenmasse 0,2:1 bis 1,2:1 beträgt, es bis zu einem Trockenmassegehalt von 20 bis 40 Gew.-% konzentriert und dann das Konzentrat vor oder nach seiner Homogenisierung sterilisiert, dadurch gekennzeichnet, daß man das Milchprodukt in einen ersten Fluß und einen zweiten Fluß trennt, daß man den ersten Fluß, der 5 bis 75 Gew.-% des Gesamtflusses darstellt, homogenisiert, daß man den ersten homogenisierten Fluß mit dem zweiten nicht homogenisierten Fluß mischt, daß man die Mischung wärmebehandelt, bevor man sie konzentriert, und dann das Konzentrat homogenisiert, bevor man es sterilisiert.

2. Verfahren nach Anspruch 1, dadurch gekennzeichnet, daß der erste durch Homogenisierung behandelte Fluß etwa 50 Gew.-% des Gesamtflusses darstellt.

3. Verfahren nach Anspruch 1, dadurch gekennzeichnet, daß man vor der Konzentrierung 0,02 bis 0,2 Gew.-% Stabilisierungssalz beigibt.

4. Verfahren nach Anspruch 1, dadurch gekennzeichnet, daß man den durch Homogenisierung behandelten ersten Strom wärmebehandelt.

5. Verfahren nach Anspruch 1, dadurch gekennzeichnet, daß man das kondensierte Milchprodukt in Behälter füllt, daß man die Behälter hermetisch versiegelt und daß man sie sterilisiert.

6. Verfahren nach Anspruch 1, dadurch gekennzeichnet, daß man das kondensierte Milchprodukt im Verarbeitungsprozess bei hoher Temperatur kurzer Dauer oder bei Ultrahochtemperatur sterilisiert, daß man es homogenisiert, daß man es kühlt und daß man das sterilisierte Milchprodukt aseptisch verpackt.
